# EUROPEAN PATENT APPLICATION

(11) **EP 1 517 490 A2**
(43) Date of publication of application: **23.03.2005**
(21) Application number: 04104510.5
(22) Date of filing: 17.09.2004
(51) Int. Cl.: H04L 12/56

(54) **Inter-piconet communication**

(30) Priority: 18.09.2003 KR 2003064857; 02.10.2003 KR 2003068844
(71) Applicant: Samsung Electronics Co., Ltd., Suwon-si, Gyeonggi-Do 442-742 (KR)
(72) Inventor: Hong, Seong-seol, Yeongtong-gu, Suwon-si, Gyeonggi-do (KR); Kim, In-hwan, Yeongtong-gu, Suwon-si, Gyeonggi-do (KR); Choi, Moon-young, Gangnam-gu, Seoul (KR)
(74) Representative: Read, Matthew Charles

(57) **Abstract**

A method for a first device which is a member of a parent piconet and a child PNC of its child piconet to communicate with a second device existing in either the parent piconet or the child piconet, including the steps of generating a command frame to request a channel time for communication with the second device by use of an identifier to identify the piconet and the device ID uniquely allotted to a device and transmitting the generated command frame to a parent PNC, receiving the channel time allotted from the parent PNC to which the command frame has been transmitted, during which the first device and the second device are allowed for communication, and allowing data to be transmitted and received between the first device and the second device during the allotted channel time. Correct communication can be made between two devices although they have identical device IDs.

## Description

The present invention relates to communication between devices in different piconets of a scatternet or the like.

There are a number of different types of piconet. One type may comprise a parent piconet and a child piconet, or a child piconet and a different child piconet, when a parent piconet and one or more child piconets coexist.

A parent piconet and a child piconet can coexist in a wireless (Personal Area Network) PAN. When coexisting, the parent piconet and the child piconet can share a frequency. This is useful. However, when the child piconet generates a media access control (MAC) header to transmit a command frame or a data frame to a specific target device, a device in the parent piconet may react to the command frame as the child and parent piconet operate at the same frequency.

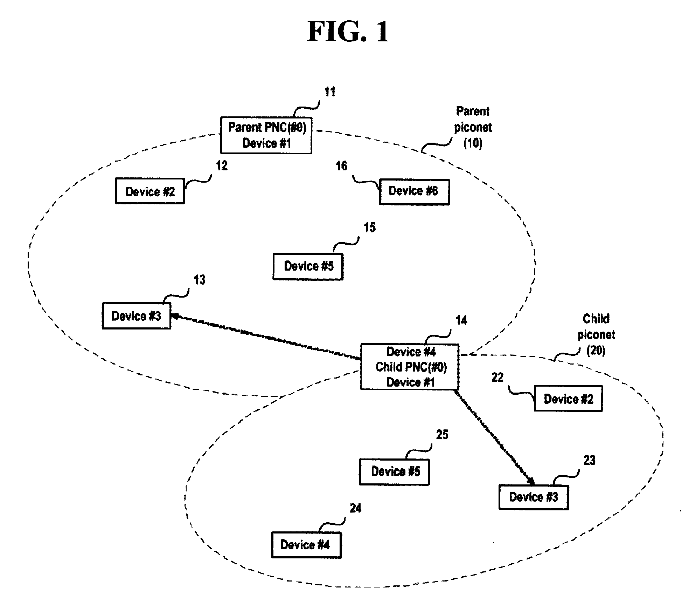

Figure 1 is a block diagram illustrating communication by a child piconet according to the IEEE 802.15.3 Standard in a known way.

A piconet coordinator (PNC) ensures that each of the devices within the piconet (or "associated devices") has a device identifier (which is indicated as "DEVID" in the IEEE Standard spec). In this regard, all of the devices within the piconet are assigned their unique IDs.

There is an exception to the above - this is the PNC itself. The PNC may have two or more device IDs. The PNC has two device IDs. The first ID is the value 0x00, which is called the PNCID. This is assigned so that other devices may identify the device as a PNC device. The second, different, ID is assigned for use with communication traffic not relevant to the PNC (in other words, when the device operates, not as PNC, but as a common device).

When a piconet is set up, the PNC assigns itself an ID to exchange data with other devices which are members of the newly generated piconet.

As illustrated in Figure 1, the parent piconet and the child piconet operate in an independent manner. The parent piconet and the child piconet assign unique device IDs to the devices within their own piconets. As a result, devices having the same device IDs can exist in both the parent piconet and the child piconet.

In this situation, where device #4, which is a child PNC and exists in the parent piconet, intends to transmit a command frame to a device #3 13 existing in the parent piconet, device #4 14 has to generate a MAC header indicating device #3 13 as the destination device. However, the correct MAC header for transmission of the command frame cannot be generated because device #4 14 has information on two devices numbered 3, i.e., device # 3 13 and device # 3 23. Therefore the correct MAC header cannot be generated because there are two devices having the same number.

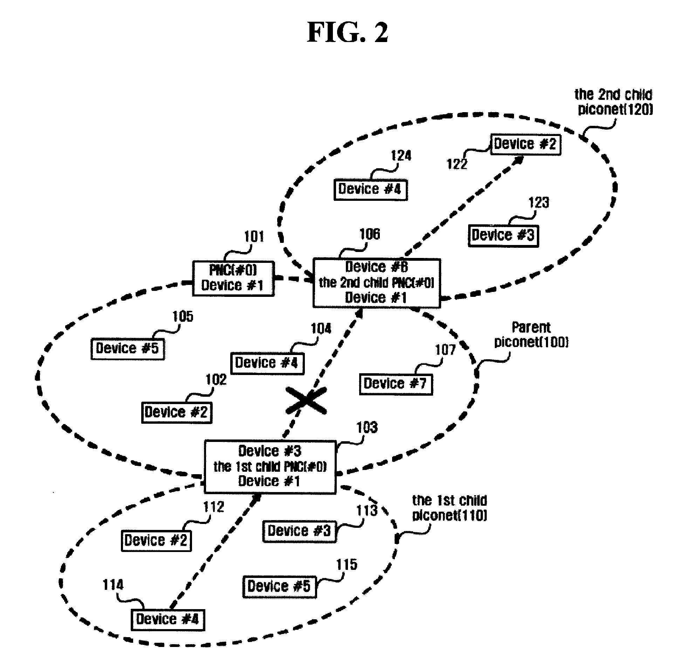

Referring to FIG. 2, a single parent piconet 100 has a plurality of child piconets 110 and 120 below it. In the field of Bluetooth®, this is sometimes referred to as a "scatternet". When device #4 114, being a member of a first child piconet 110 and having 4 as a device ID (DEVID), intends to communicate with device #2 122, being a member of a second child piconet 120 and having 2 as DEVID, there is no method of distinguishing devices 102 and 112 each having the same DEVID and existing in the piconets 100 and 110.

In the wireless PAN, an independent piconet such as a parent piconet and a dependent piconet such as a child piconet can coexist. However, there is no method for communicating between a member of the independent piconet and a member of the dependent piconet, or between a member of the dependent piconet and a member of a different dependent piconet.

Accordingly, the present invention addresses this problem.

According to the present invention, there is provided a method of facilitating communication between non-piconet controller devices in first and second piconets, the method comprising the controller devices of said piconets communicating device association information for their respective piconets to each other, said device association information comprising device IDs and associated piconet IDs.

Preferably, the controller devices disseminate device association information to the other devices in their respective piconets.

According to the present invention, there is provided a device configured for operation as a piconet controller, the device comprising communication means and processing means, characterised in that the device is configured to transmit device association information to another piconet controller using said communication means, said device association information comprising device IDs and associated piconet IDs.

Preferably, the device is configured to disseminate said device association information to the other devices in the piconet for which it is the controller.

According to the present invention, there is provided a method of performing communication between first and second devices belonging to different piconets of the same scatternet, the method comprising:
the first device determining whether the second device is in the same piconet and if not transmitting the data to its piconet controller for routing; and
said piconet controller determining whether the second device is in another piconet to which it belongs and, if so, transmitting the data directly to the second device.

According to the present invention, there is provided a method of performing communication between first and second devices belonging to different piconets of the same scatternet, the method comprising:
the first device determining whether the second device is in the same piconet and if not transmitting the data to its piconet controller for routing; and
said piconet controller determining whether the second device is in another piconet to which it belongs and, if not, transmitting the data to the piconet controller of the piconet containing the second device for routing.

Additional preferred and optional features of the present invention are set forth in claim 7 to 23 appended hereto.

An embodiment of the present invention will now be described, by way of example only, and with reference to Figures 4B-1 to 5 and Figures 7 to 11 of the accompanying drawings, in which:
Figure 1 is a block diagram illustrating communication, in a known way, by a child piconet according to the IEEE 802.15.3 Standard;
Figure 2 is a view illustrating a piconet system having a plurality of piconets;
Figure 3 is a view illustrating a hierarchical structure of each device in the piconet according to the IEEE 802.15.3 Standard;
Figures 4A-1 and 4A-2 are views each illustrating an Internal DEV Association Table contained in a child PNC according to known art;
Figures 4B-1 and 4B-2 are views each illustrating an example of application of a PNID to the Internal DEV Association Table contained within a PNC according to an embodiment of the present invention;

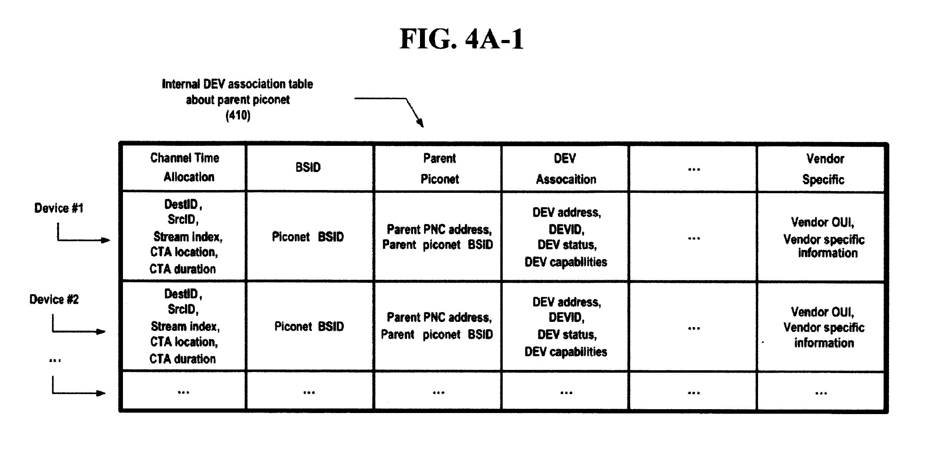

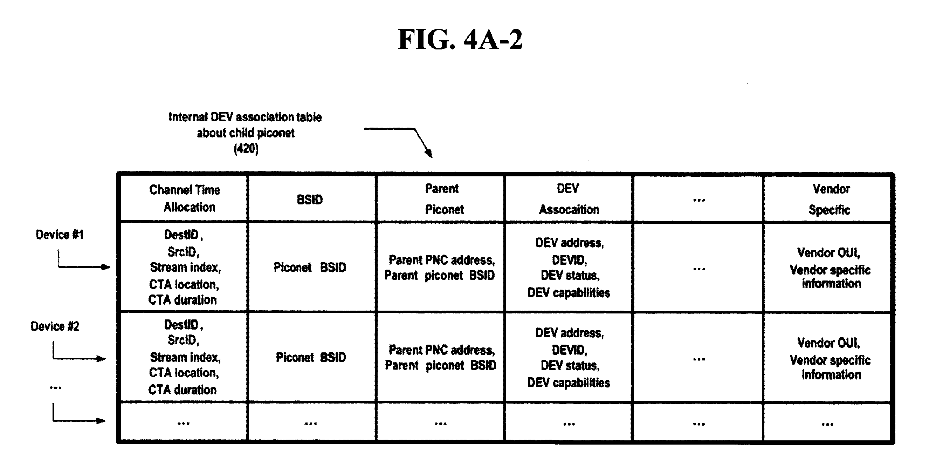

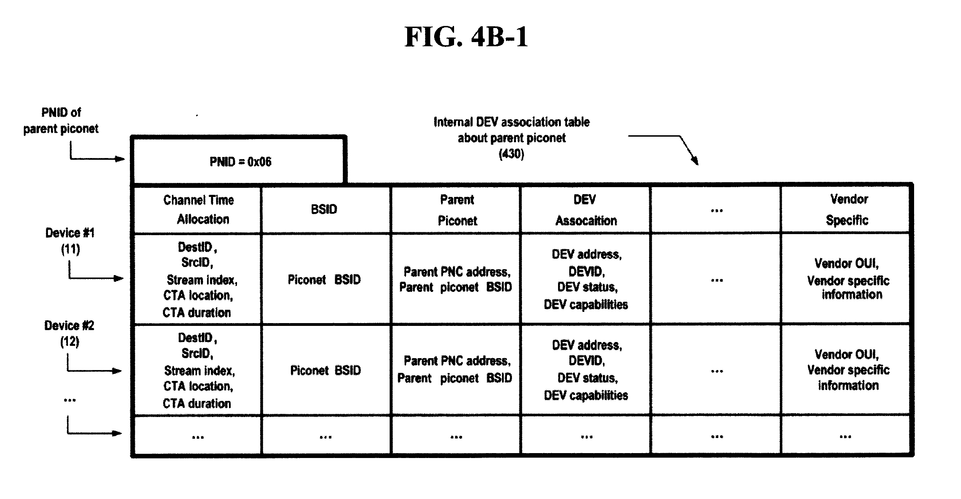

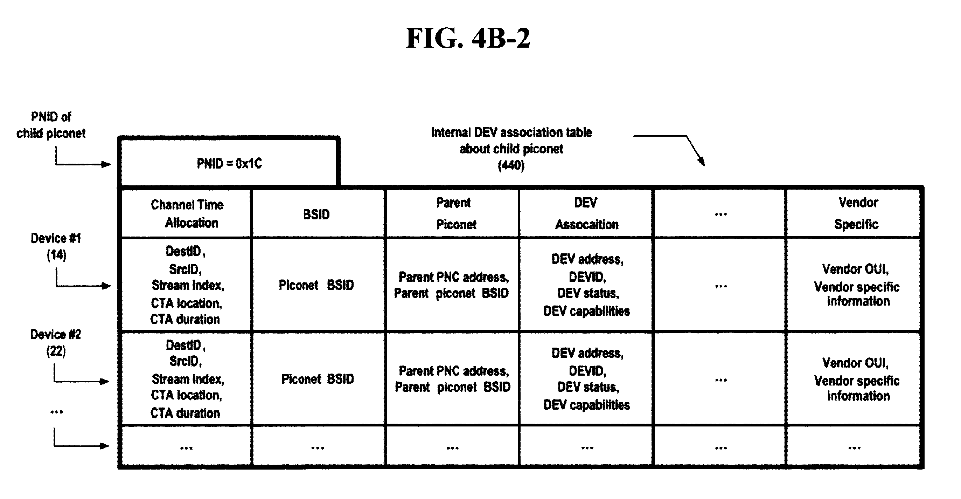

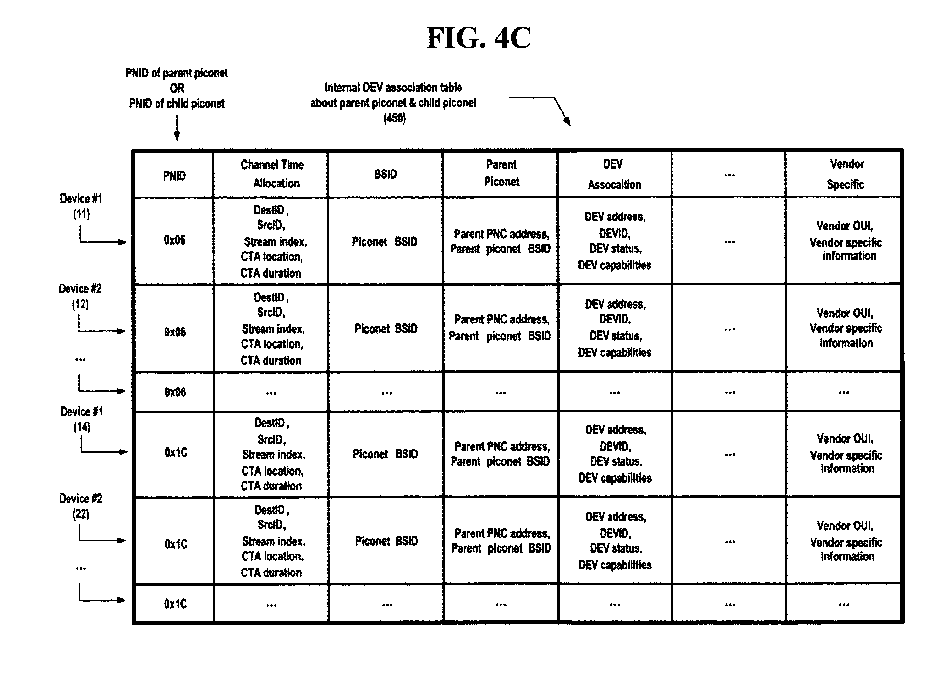

Figure 4C is a view illustrating another example of application of a PNID to the Internal DEV Association Table contained within a PNC according to another embodiment of the present invention;

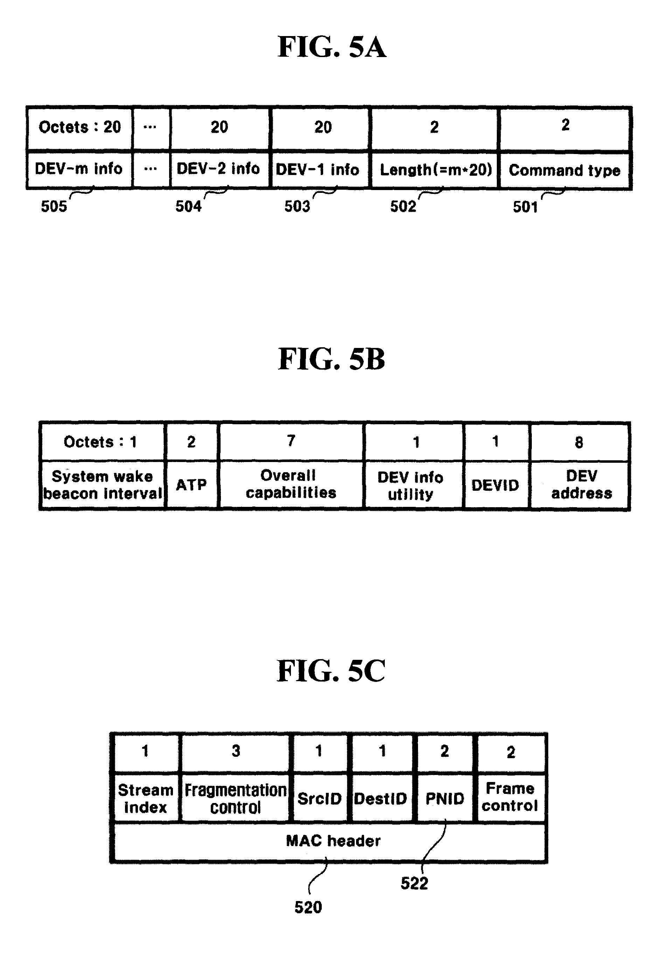

Figure 5A is a view illustrating a configuration of a PNC information command frame;
Figure 5B is a view illustrating a detailed configuration of a DEV info field of the PNC information command frame;
Figure 5C is a view illustrating a configuration of a header part of a MAC frame;

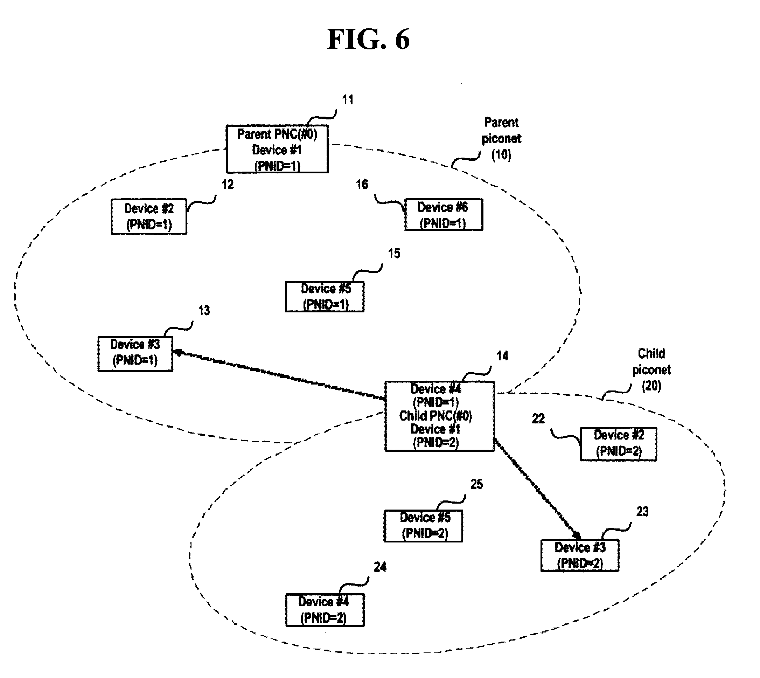

Figure 6 is a view illustrating when the PNID is applied in the situation of Figure 1;

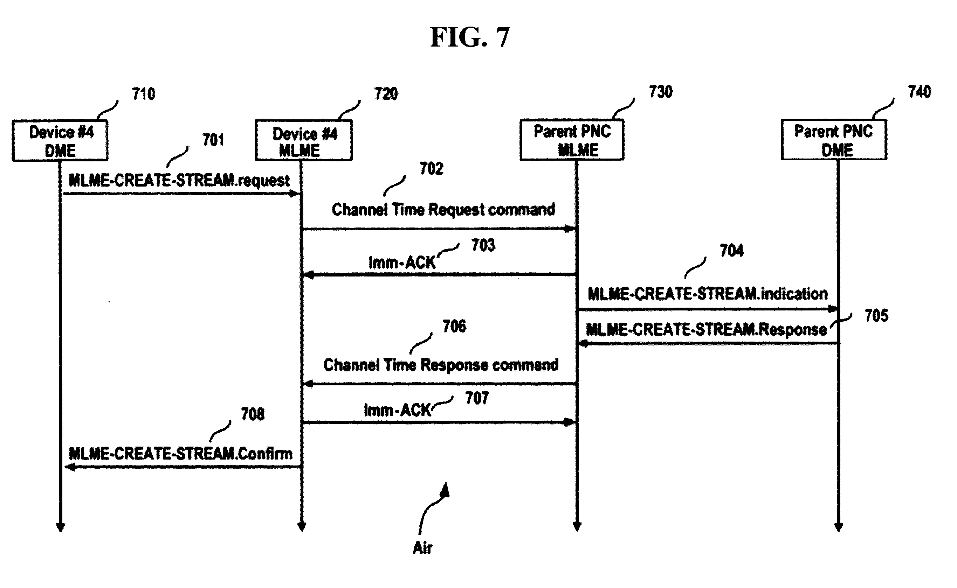

Figure 7 is a view illustrating a process of transmission and reception of a command frame between a device and a PNC by application of the PNID;

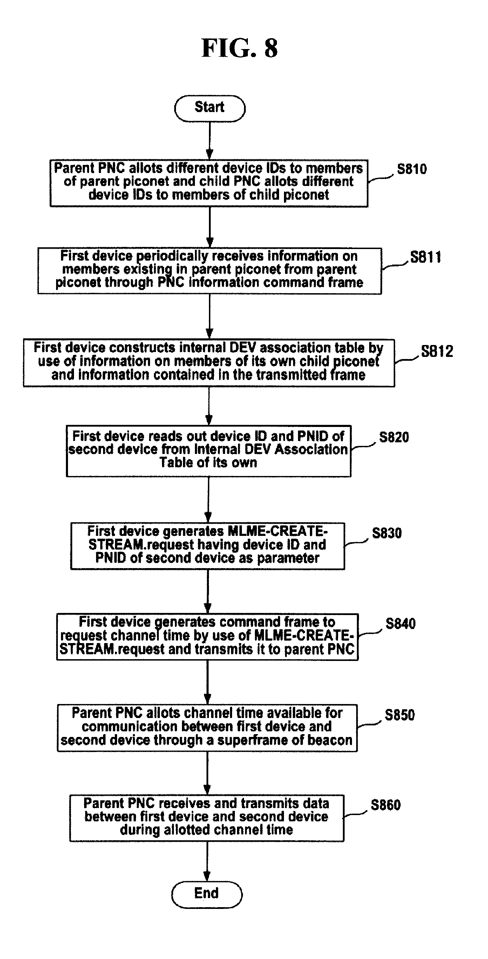

Figure 8 is a flow chart showing a process of the present invention;
Figures 9A-1 to 9A-3 are views illustrating a first example of Internal DEV Association Tables contained within the devices respectively;

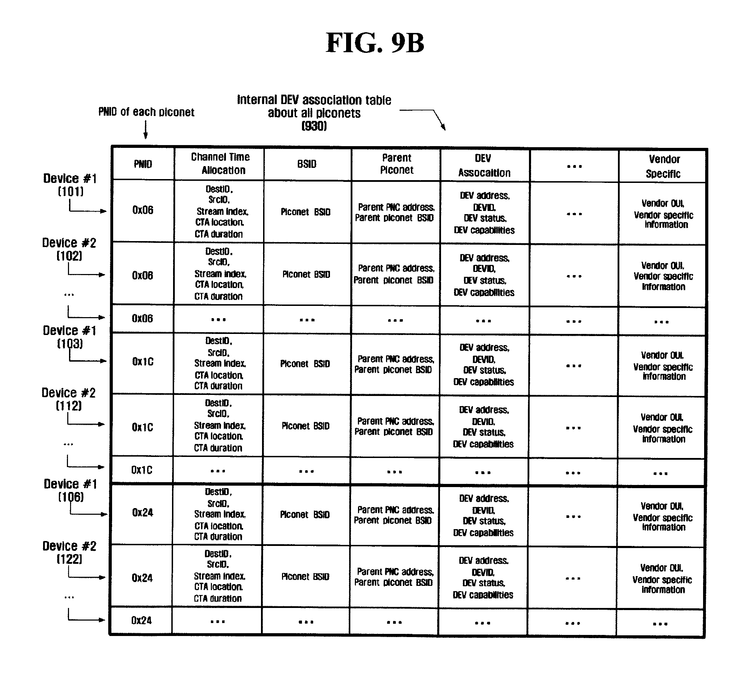

Figure 9B is a view illustrating a second example of Internal DEV Association Tables which the devices respectively have;

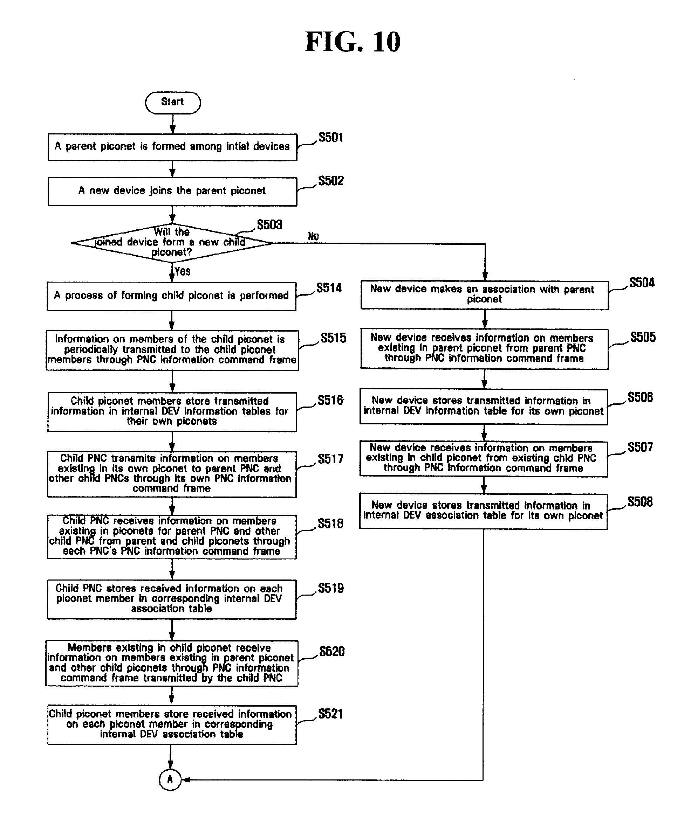

Figure 10 is a flow chart illustrating an operation of the present invention; and

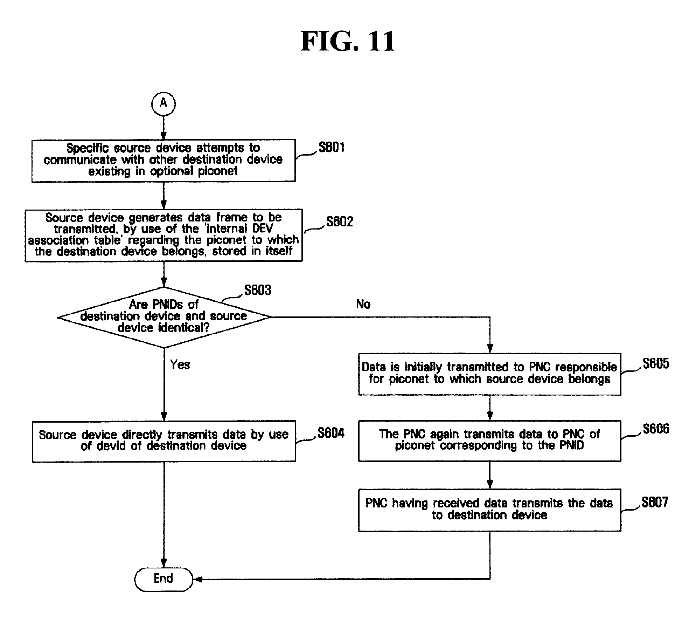

Figure 11 is a flow chart illustrating an operation of the present invention subsequent to the operation in Figure 10.

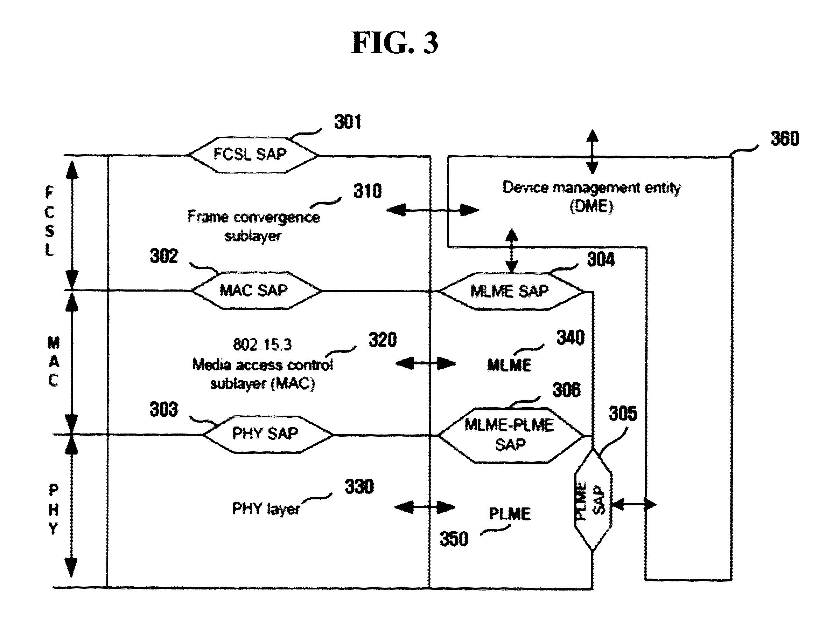

Referring to a stack structure shown in Figure 3, a scheme for having communication between devices according to the IEEE 802.15.3 Standard will be briefly described. A MAC layer 320 and a Physical (PHY) layer have respective management entities. The management entity for the MAC layer is called MLME (MAC layer management entity) 340 and the management entity for the PHY layer is called PLME (PHY layer management entity) 350. These entities provide service interfaces so as to allow layer management functions to be performed in each layer.

Also, for the MAC layer to function correctly, a device management entity (DME) 360 is provided. The DME operates independently in each layer, collecting information about the layer-dependent status of each layer from management entities located in several layers and also to set layer-specific parameters of each layer.

Several service access points (SAP) serve as interfaces to transmit information among the variety of entities described above. Information between the PHY layer 330 and the MAC layer 320 is transmitted by a PHY SAP 303 and information between the MAC layer 320 and a frame convergence sub layer (FCSL) 310 is transmitted by a MAC SAP 302. Information between DME 360 and PLME 350 is transmitted by a PLME SAP 305 and information between MLME 340 and PLME 350 is transmitted by a MLME-PLME SAP 306.

Referring to Figures 4A-1 and 4A-2, each device uses an Internal DEV Association Table to store various information about members of the piconet in which the device is located. A device which is both a device of the parent piconet and is the child PNC of a child piconet within the "scatternet" (a group of piconets sharing a common device) has both of the Internal DEV Association Tables 410 and 420. One of the tables is for storing information about members of the parent piconet and the other table is for storing information about members of the child piconet. A field relevant to parent piconet information, a field relevant to device association (DEV association) information, and a field relevant to vender specific information or other fields, are stored with reference to device ID in each table. Fields may have sub-fields containing detailed information of the fields.

Each device contains, in a row, information about the fields as described above. The tables 410 and 420 show that there are devices having the same device IDs. Thus, it is not possible for a device to transmit data to another device having the identical device ID.

Referring to Figures 4B-1 and 4B-2, a PNID (piconet identifier) and BSID (beacon source identifier) defined in the IEEE 802.15.3 Standard specification are similar to each other in that both of them are assigned to each piconet. If a PNC discovers a different PNC using an identical PNID or BSID, it changes its PNID or BSID. In this case, the PNID must be changed, but the BSID must not be changed. The Standard specification provides that both of the PNID and the BSID cannot be changed simultaneously. Thus, it would be more efficient and reliable to use the PNID as an identifier to identify the piconet. According to the present invention, the PNID is added to each of the Internal DEV Association Tables. Added PNIDs are then transmitted whenever exchanging a variety of primitives, so that the device can be uniquely identified even though the device IDs (DEVIDs) are identical. This allows the device to communicate with the other devices as desired. For example, if a child PNC wishes to transmit data to a device #2 12, a member of the parent piconet, it can transmit the data correctly to the device #2 12. This is because, although there are two devices 12 and 22 whose device ID is 2, there is only one device whose device ID is 2 and PNID is 0x06.

In addition to the method of applying a PNID to the table itself, a method of entering PNIDs into each row corresponding to each device while using a single table may be considered as another embodiment of the present invention. Referring to Figure 4C, this method is disadvantageous in that the PNID must be entered into each row. However, this method is advantageous as only a single table needs to be managed in a simple manner. Thus, there is no need to have a plurality of tables for the piconet. In the single Internal DEV Association Table according to this method, the PNID is added to each row of the Internal DEV Association Table, and the added PNIDs are transmitted whenever a variety of primitives are exchanged, so that an unique ID of each device can be identified even though the device IDs (DEVIDs) are identical, and the devices can communicate with the other device as desired.

Figure 5A is a view illustrating a configuration of a PNC information command frame, Figure 5B is a view illustrating a detailed configuration of a DEV info field of the PNC information command frame, and Figure 5C is a view illustrating a configuration of a header part of a MAC frame;

Member devices of a parent piconet periodically receive information about members existing in the parent piconet from a parent PNC via a PNC information command frame. The child PNC, which is a member of the parent piconet, already knows information about members of the child piconet it controls, and thus, the child PNC can construct an Internal DEV Association Table using information already known about the child piconet members as well as information contained in the transmitted frame. The PNC information command frame comprises a Command Type field 501 to indicate the type of command frame, a Length field 502 to indicate the amount of information to be occupied by a DEV info field, and a plurality of DEV info fields 503 to 505. Each of the DEV info Fields has a detailed construction as illustrated in Figure 5B.

The PNC information command is a command frame which is broadcast if a change has occurred within the piconet. Thus, the child PNC broadcasts the change in the child piconet using the PNC information command frame. The parent PNC and other child PNCs having received the broadcast command frame note that a change has occurred in their respective piconets. Since the DEV info fields 503 to 505 are variable, they are not limited by the number of devices.

However, since the Internal DEV Association Table is classified using the PNID, information about the PNID is indispensable. The PNID information is written in a PNID field, which is one field contained in the MAC headers 520. The construction of MAC 520 is shown in Figure 5C.

Referring to Figure 6, if a child PNC 14 wishes to transmit data to device #3 13 of the parent piconet, it can establish using its own Internal DEV Association Table that device #3 13 has a device ID of 3 and a PNID of 1. Thus, since device #3 13 is not identical to device #3 23 of the child piconet (which has the same device ID), data is correctly transmitted.

Referring figure 7, a primitive CREATE-STREAM from amongst the primitives will be described by way of example. The primitive CREATE-STREAM is used when a device requests PNC channel time. Initially, the DME 710 on the side of the device generates a MLME-CREATE-STREAM.request 701 and then transmits it to MLME 720.

A device #4 14 is a device located in the parent piconet and is also a child PNC of the child piconet. The device 14 is allotted the device ID of 4 from the parent PNC. The device #4 14 uses MLME-CREATE-STREAM.request, a primitive, to communicate with a specific target device. The device #4 14 has two Internal DEV Association Tables, which are classified using the PNID. Thus, if a PNID is added as a new parameter to a primitive described in reference to the known art, the table will be structured as follows.

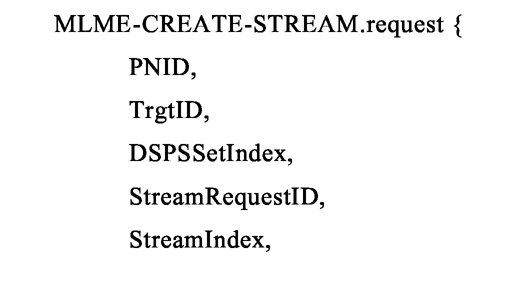

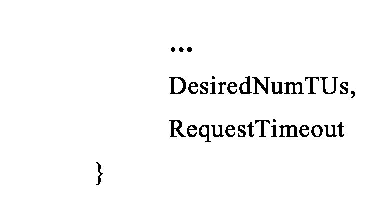

An MLME 720 in the device #4 generates a command frame 702 to request a channel time which is transmitted to an MLME 730 of the parent PNC. Since the PNID is contained in the MLME-CREATE-STREAM.request 701 received from the DME 710 of the device #4 14, a command frame having the correct MAC header is generated.

The command frame 702 is incorporated into a radio frequency (RF) signal and is then transmitted to the parent PNC through the air via a PHY layer. The RF signal is demodulated in the PHY layer of the parent PNC and the command frame 702 extracted. The command frame 702 is transmitted to the MLME 730 of the parent PNC via the MAC layer of the parent PNC. The MLME 730, having received the transmitted command frame 702, generates an Imm-ACK frame 703. The Imm-ACK frame 703 is a frame for acknowledging receipt of the frame 702, and which is transmitted to the device #4.

The command frame transmitted to the MLME 730 of the parent PNC is transmitted to the DME 740 of the parent PNC in the form of MLME-CREATE-STREAM.indication 704. In response, the DME 740 of the parent PNC transmits a MLME-CREATE-STREAM.response 705 to the MLME 730 of the PNC, and the MLME 730 of the PNC then transmits an RF signal through the air via the MAC layer and the PHY layer. The RF signal includes information about the command frame 706 for the CREATE-STREAM response. The RF signal is demodulated in the PHY layer at the device and the command frame 706 is extracted. The command frame 706 is transmitted to the MLME 720 of the device after passing through the MAC layer of the device side. The MLME 720 of the device receiving the command frame 706 generates an Imm-ACK frame 707 to acknowledge receipt of the frame 706 and transmits it to the parent PNC. The command frame transmitted to the MLME 720 of the device is transmitted to the DME 710 of the device in the form of MLME-CREATE-STREAM.confirm 708.

If it is confirmed from the parent PNC 11 that the device #4 14 can communicate with a specific target device, the PNC 11 allots a channel time, as the time available for communication between the device #4 and the target device, using the superframe of a beacon. Then, the device #4 14 can communicate with the target device during the allotted channel time.

It has been described, by way of example, when a primitive is CREATE-STREAM. However, other primitives such as MLME-DISASSOCIATE, MLME-MEMBERSHIP-UPDATE, MLME-PNC-HANDOVER, MLME-PNC-INFO, MLME-PROBE can also be operated, including the PNID as an added parameter.

Referring to Figure 8, the parent PNC allots different device IDs to members of the parent piconet, and the child PNC (the first device) allots different device IDs to members of the child piconet (S810). A first device, which is a member of a parent piconet and functions as the child PNC, is also allotted a device ID from the parent PNC. In this process, an identical device ID may be allotted both to a device as a member of the parent piconet and a member of the child piconet.

Member devices of a parent piconet periodically receive information about members of the parent piconet from the parent PNC via a PNC information command frame. Since the first device is one of the members, it likewise receives the frame transmitted (S811). The first device already has information about members of the child piconet, and thus, it constructs an Internal DEV Association Table using information about the child piconet members as well as information contained in the transmitted frame (S812).

Next, the first device reads information about the device ID and PNID of a second device from its own Internal DEV Association Table (S820). The Internal DEV Association Table may be structured by adding respective PNIDs to the two tables as shown in Figures 4B-1 and 4B-2, or by entering a PNID into each row of each table as shown in Figure 4C.

The first device then generates a MLME-CREATE-STREAM.request containing, as a parameter, information about the device ID and PNID of a target device (second device) (S830). The first device generates a command frame to request channel time for communication with the target device using information about the device ID and PNID of the target device (second device). The MLME-CREATE-STREAM.request it is transmitted to the parent PNC (S840). The parent PNC allots the channel time through a superframe of a beacon, informing the first device when the first device and the second device can communicate with each other (S850). Data is then transmitted and received between the first device and the second device during the allotted channel time (S860).

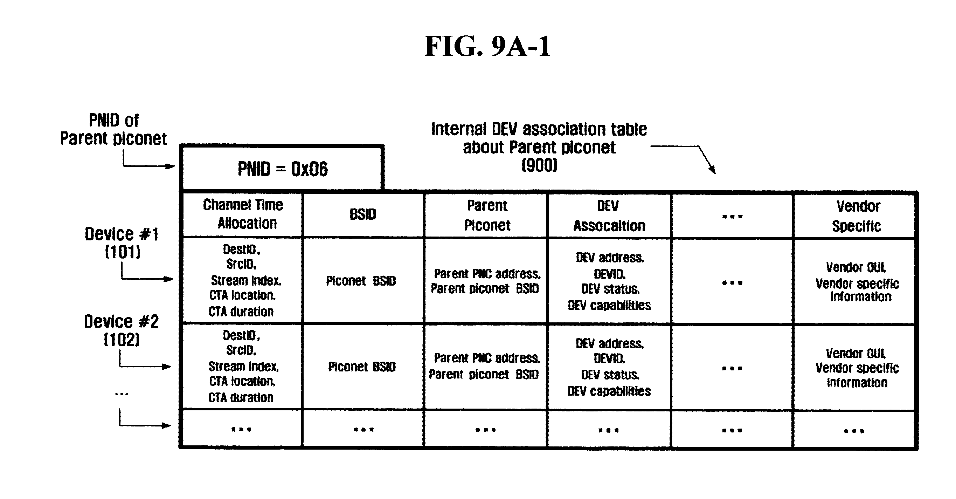

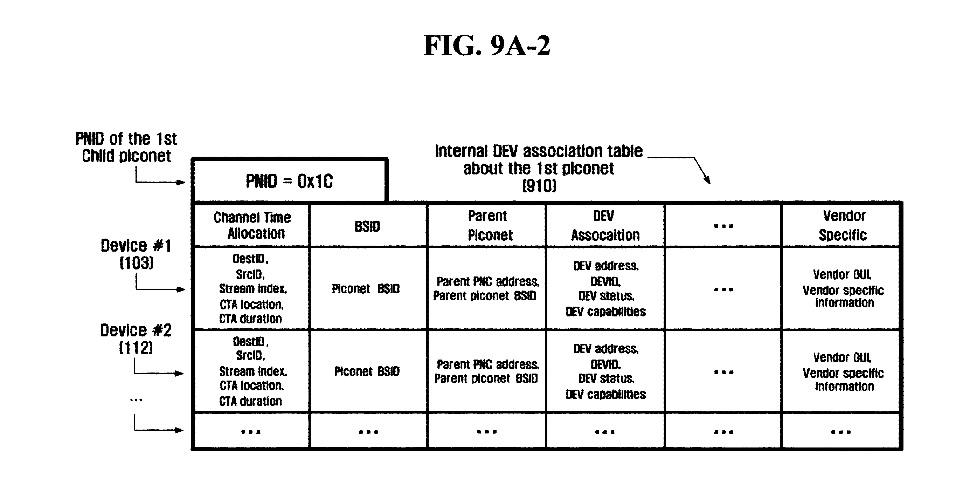

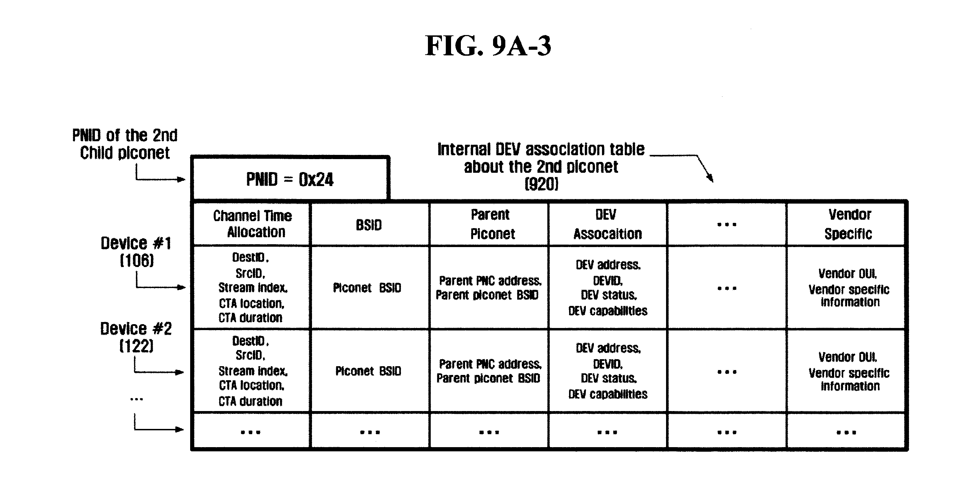

Figure 9A is a view illustrating a first example of Internal DEV Association Tables which the devices respectively have. In a known way, when a new device participates in the piconet, the new device transmits its own device information to the PNC and is associated as a member with the piconet. Through these processes, the PNC obtains information about the piconet members located within its piconet and stores the information in the Internal DEV Association Table. The Internal DEV Association Table is a kind of device information table containing therein information on devices within a single piconet, which is used when a device intends to transmit data to a different device.

The PNC periodically transmits pieces of device information to each member using a beacon. Each member device, having received the information, stores the information in its own Internal DEV Association Table and can later communicate with a different member device using the information contained in the table. In the known art, communication is allowable between members within the same piconet; however, there is no method for enabling communication between members within different piconets.

To solve this problem, the PNCs controlling their own piconets share Internal DEV Association Tables, which they respectively have, through periodic communication between themselves. This allows each PNC to know information about all the devices existing in all the piconets. If the PNC transmits this device information to each member of its piconet, each member device having received the information stores the received information in its own Internal DEV Association Table, and later can transmit data to a destination device belonging to a different piconet using the stored information. In this case, the PNC communicates via a PNC of the piconet to which the destination device belongs, as an intermediate position.

However, although the transmitting device knows information about the destination device, communication in the piconet is made by DEVID. Here, each device has its own unique DEVID within a single piconet, but duplicate DEVIDs may coexist in other piconets. Thus, there still exists the problem that a unique destination device cannot be determined.

The present invention enables data to be transmitted to a correct destination device by use of an identifier identifying each piconet, even where there exist duplicate DEVIDs. If a PNC discovers a different PNC using the identical piconet identifier (PNID) or Beacon Source Identifier (BSID) to its own, it changes its own PNID or BSID. In this case, the PNID must be changed, and the BSID can be optionally changed. The IEEE 802.1 Standard specification does not allow both the PNID and the BSID to be changed simultaneously. Taking this into consideration, it is a more efficient method to use the PNID as an identifier identifying the piconet. In this regard, the PNID is added to each of the Internal DEV Association Tables according to the present invention. The tables to which the PNID is added are then transmitted upon exchanging a variety of parameters, thereby enabling the transmitting device to communicate with the destination device. This is because each device is identified in a unique manner even though there is duplication in device IDs (DEVIDs).

Under the wireless communication environment as shown in Figure 1, three devices existing in three piconets have respectively one Internal DEV Association Table as shown therein: in other words, there are three Internal DEV Association Tables. Each table comprises fields of Channel Time Allocation information, BSID, Parent Piconet and Vendor Specific Information and the like organised by device. There may exist sub-fields containing detailed information of their upper fields if the fields are needed.

To store information about members of the same piconet and about members existing in different piconets, each device uses three Internal DEV Association Tables 900, 910 and 920. These contain information about all the members existing in the three piconets 100, 110 and 120. Thus, there are as many Internal DEV Association Tables as there are existing piconets, and they are classified based on PNID.

As described with reference to Figure 2, the case where device #4 114 of the first child piconet intends to transmit data to device #2 122 of the second child piconet will be considered. Firstly, if the source device and the destination device have the same PNID, it indicates that they exist in the same piconet, and thus, data can be transmitted directly by using the DEVID of the destination device. Secondly, if they have different PNIDs, it indicates that they exist in different piconets, and thus, data is initially transmitted to the PNC responsible for the piconet to which the source device belongs. The data is then transmitted to the PNC of the piconet corresponding to the different PNID, and the data is finally transmitted to the destination device. Lastly, if the destination device belongs to the parent piconet, it indicates that the PNC responsible for the source device and the designation device both belong to the parent piconet, and thus, data can directly be transmitted between both of them.

The example illustrated in Figure 2 corresponds to the second case described above. In other words, when device #4 114, a member of the first child piconet 110 intends to transmit data to device #2 122, a member of the second child piconet 120, device #4 114 first transmits the data to the first child PNC 103 responsible for the piconet to which it belongs. Then, the first child PNC 103, a member of the parent piconet, transmits the data to the second child PNC 106, which is also a member of the parent piconet, and the second child PNC 106 transmits the data to device #2 122, a member of the second child piconet.120.
In addition to a method of adding PNID to the table itself as described above, another method of applying PNID to each row corresponding to each device while using a single table may be considered as another embodiment of the present invention. Figure 9B illustrates an example of applying PNID to Internal DEV Association Table that each device has in this case. If the table is constructed in this manner, the PNID must be entered into each column. However, using this method, there is no need to have a plurality of tables, each one representing a piconet. Instead the PNID can be simply managed using a single table 930. In the single Internal DEV Association Table according to this method, the PNID is added to each of the rows of the table and the added PNIDs are transmitted whenever exchanging a variety of primitives occurs. This means that a unique ID for each device can be identified even though the device IDs (DEVIDs) are identical, and the devices can communicate with the other devices as desired.

Referring to Figure 10, an initial, parent, piconet is constructed (S501). If a new device joins the parent piconet (S502), the new device determines whether to be associated with the parent piconet or to construct a child piconet (S503).

If the device determines to be associated with the parent piconet, it passes through the association process as defined in the Standard specification (S504). Next, the device periodically receives information on members associated with the parent piconet from the parent PNC through the PNC information command frame (S505), and stores the transmitted information about the parent piconet in the Internal DEV Association Table (S506).

Where child piconets are formed, the device periodically receives information on members existing in the child piconets from the child PNCs through the PNC information command frame (S507). In other words, the child PNC transmits information on the members associated with the chilled piconet to the parent PNC and other child PNCs through the PNC information command frame. The parent PNC and other child PNCs transmit this information to the members associated with their own piconets. Thereafter, each device stores the transmitted information in the 'International DEV Association Table' associated with each piconet (S508).

In step (S503), where the device having joined the parent piconet wishes to form a child piconet, in other words, where it determines to be a child PNC, it passes through the child piconet-forming process (S514), which proceeds according to the known Standard specification.

All the devices existing in the child piconet periodically receive information about the members existing in the child piconet from the child PNC via the PNC information command frame (S515). This information is stored in the Internal DEV Association Tables for their respective piconets (S516). Thereafter, the child PNC transmits the information about the members associated with its own piconet to the parent PNC and the other child PNCs through the PNC information command frame (S517). The parent PNC and each of the child PNCs stores the transmitted information in the Internal DEV Association Table for the concerned piconet.

The child PNC receives information about members associated with the parent PNC and other child PNCs through the PNC information command frame from each PNC (S518). The child PNC having received the information stores the received information about each of the piconet members in the corresponding Internal DEV Association Tables (S519). Members existing in the child piconet receive information about the members existing in the parent piconet and the other child piconets through the PNC information command frame (S520). The devices having received the transmitted information store the received information in the corresponding Internal DEV Association Tables (S521).

Using the process shown in Figure 10, all of the devices obtain information about all the of the devices existing in all of the piconets and store this in their own Internal Dev Association Table, and thereafter, they can transmit and receive data among the devices using the process shown in Figure 11.

Firstly, a specific source device attempts to communicate with another destination device existing in a piconet (S601). The source device generates a data frame to be transmitted, using the Internal DEV Association Table of the piconet to which the destination device belongs (S602).

Then, the source device determines whether the PNID of the destination device is identical to its own PNID (S603). If the PNIDs of the source device and the destination device are identical, it indicates that they coexist in the same piconet, and thus, it directly transmits the data using the DEVID of the destination device (S604).

However, if their PNIDs are different, it indicates that they exist in different piconets. Thus, the source device initially sends the data to the PNC responsible for the piconet to which the source device belong (S605), and the PNC again transmits the data to the PNC of the piconet corresponding to the different PNID (S606). Thereafter, the data is transmitted to the destination device (S607). If the PNID of the destination device refers to the PNID of the parent piconet, it indicates that the PNC responsible for the source device and the designation device are both the members of the parent piconet, and thus, data can be transmitted between both of them.

As described above, where a device belonging to a parent piconet and simultaneously functioning as a child PNC of its child piconet intends to communicate with another device existing in either the parent piconet or the child piconet, correct communication can be made between the two devices although they have identical device IDs.

According to the present invention, communication among devices belonging to different piconets can be made in an efficient and simple manner by use of PNIDs existing in the MAC header, with no inconvenience to use a separate bridging in the upper layer of the MAC layer.

Also, although the phrase "scatternet" has been used in the described embodiment, it will be understood that the present invention is not limited to Bluetooth®.

## Claims

1. A method of facilitating communication between non-piconet controller devices (11, 14) in first and second piconets (100, 110), the method comprising the controller devices (11, 14) of said piconets (10, 20) communicating device association information for their respective piconets (10, 20) to each other, said device association information comprising device IDs and associated piconet IDs.

2. A method according to claim 1, wherein the controller devices (11, 14) disseminate device association information to the other devices (12, ..., 16, 22, ..., 25) in their respective piconets (11, 14).

3. A device configured for operation as a piconet controller, the device (14) comprising communication means and processing means, **characterised in that** the device (14) is configured to transmit device association information to another piconet controller (11) using said communication means, said device association information comprising device IDs and associated piconet IDs.

4. A device according to claim 3, wherein the device is configured to disseminate said device association information to the other devices (22, ..., 25) in the piconet (20) for which it is the controller.

5. A method of performing communication between first and second devices (114, 103) belonging to different piconets (100, 110) of the same scatternet, the method comprising:
the first device (114) determining whether the second device is in the same piconet and if not transmitting the data to its piconet controller (103) for routing; and
said piconet controller (103) determining whether the second device is in another piconet (100) to which it belongs and, if so, transmitting the data directly to the second device.

6. A method of performing communication between first and second devices (114, 122) belonging to different piconets (110, 120) of the same scatternet, the method comprising:
the first device (114) determining whether the second device is in the same piconet and if not transmitting the data to its piconet controller (103) for routing; and
said piconet controller (103) determining whether the second device is in another piconet (100) to which it belongs and, if not, transmitting the data to the piconet controller (106) of the piconet (120) containing the second device (122) for routing.

7. A method for a first device which is a member of a parent piconet and a child piconet coordinator (PNC) of a child piconet to communicate with a second device existing in either the parent piconet or the child piconet, comprising:
generating a command frame to request a channel time for communication with the second device by use of a parent identifier to identify the parent piconet and a child identifier to identify the child piconet and a first device ID and second device ID allotted to the first and second devices, respectively;
transmitting the generated command frame to a parent PNC;
receiving a channel time allotted from the parent PNC to which the command frame has been transmitted, during which the first device and the second device communicate; and
transmitting and receiving data between the first device and the second device during the allotted channel time.

8. The method as claimed in claim 7, wherein the parent and child identifiers to identify the parent and child piconets are piconet identifiers (PNIDs) as stipulated in IEEE 803.15.3 Standard.

9. The method as claimed in claim 8, wherein the operation of generating a command frame comprises:
a) allotting, by the parent PNC, parent device IDs to members of the parent piconet and allotting, by the child PNC, child device IDs to members of the child piconet;
b) reading out, by the parent PNC, the second device ID and a PNID of the second device from an Internal DEV Association Table of the first device, allotted in (a);
c) generating, by the parent PNC, MLME-CREATE-STREAM.request containing as a parameter the second device ID and the PNID of the second device; and
d) generating, by the first device, the command frame to request the channel time for communication with the second device, by use of the second device ID and the PNID of the second device and transmitting the command frame to the parent PNC.

10. The method as claimed in claim 9, wherein the Internal DEV Association Table comprising a plurality of tables, is configured by allotting a unique PNID for each of the plurality of tables of the Internal DEV Association Table of the first device.

11. The method as claimed in claim 9, wherein the Internal DEV Association Table is configured by entering a unique PNID into each row of the Internal DEV Association Table of the first device.

12. A system for a first device which is a member of a parent piconet and a child piconet coordinator (PNC) of a child piconet to communicate with a second device existing in either the parent piconet or the child piconet, comprising:
a first device generating a command frame to request a channel time for communication with the second device by use of a parent identifier and a child identifier to identify the parent piconet and the child piconets, respectively, and first device ID and second device ID allotted to the first and second devices, respectively, and transmitting the generated command frame to a parent PNC, and being allotted the channel time for communication with the second device from the parent PNC, wherein
the second device being allotted the second device ID from the child PNC or the parent PNC and receiving data from and transmitting data to the first device during the channel time.

13. The system as claimed in claim 12, wherein the first and second identifiers to identify the parent and the child piconets are piconet identifiers (PNIDs) as stipulated in IEEE 803.15.3 Standard.

14. The system as claimed in claim 13, wherein a process of generating a command frame and transmitting it to the parent PNC comprises:
a) the parent PNC allotting parent device IDs to members of the parent piconet and the child PNC's allotting child device IDs to members of the child piconet;
b) the parent PNC reading out the second device ID and a PNID of the second device from an Internal DEV Association Table of the first device, allotted in (a);
c) the parent PNC generating MLME-CREATE-STREAM.request containing as a parameter the second device ID and the PNID of the second device; and
d) the first device generating the command frame to request the channel time for communication with the second device, by use of the second device ID and the PNID of the second device and transmitting the command frame to the parent PNC.

15. The system as claimed in claim 14, wherein the Internal DEV Association Table comprising a plurality of tables, is configured by allotting a unique PNID for each of the plurality of tables of the Internal DEV Association Table of the first device.

16. The system as claimed in claim 14, wherein the Internal DEV Association Table is configured by entering a unique PNID into each row of the Internal DEV Association Table of the first device.

17. A method for communicating a first device with a second device coexisting in a piconet system having a parent piconet and at least one child piconet, comprising:
receiving, by a first child piconet coordinator (PNC), information on first member devices from the parent PNC and other child PNCs through first predetermined command frames and storing the information in at least one device information table of the first child PNC;
receiving, by member devices of the first child piconet, information on the first member devices from the first child PNC through second predetermined command frames as received information and storing the received information in respective device information tables of the member devices of the first child piconet;
attempting, by the first device of the first member devices, to communicate with the second device belonging to member devices of a different piconet;
generating, by the first device, a data frame to be transmitted to the second device by use of a device information table of the first device, as generated data; and
transmitting, by the first device, the generated data frame to the second device,
wherein the device information table of the first device comprises an identifier to identify the different piconet.

18. The method as claimed in claim 17, wherein the identifier to identify the different piconet is a piconet identifier (PNID) of the second device as stipulated in IEEE 802.15.3 Standard.

19. The method as claimed in claim 17, wherein the first and the second predetermined command frames are PNC information command frames as stipulated in IEEE 802.15.3 Standard.

20. The method as claimed in claim 17, wherein the device information tables of the first and the second devices comprise Internal DEV Association Tables.

21. The method as claimed in claim 18, wherein the operation of transmitting comprises:
determining, by the first device, whether the PNID of the second device is identical to a PNID of the first device;
directly transmitting, by the first device, data by using a device identifier (DEVID) of the second device when it is determined that the PNIDs of the first and second devices are identical; and
transmitting, by the first device, the data to a PNC of a piconet of the first device, when it is determined that the PNIDs of the first and second devices are different, the PNC of the first device transmitting the data to the PNC of the of the second piconet, and thereafter, the PNC of the second piconet having received the data, transmitting the data to the second device.

22. The method as claimed in claim 20, wherein the Internal DEV Association Table forms a number of tables, wherein the number is equivalent to the number of the parent and the at least one child piconets and allots a unique PNID for the parent and the at least one child piconet in each of the number of tables.

23. The method as claimed in claim 20, wherein the Internal DEV Association Table forms a single table regardless of a number of the parent and the at least one child piconets, and inserts unique PNID for the parent and the at least one child piconet in each column.
